# EUROPEAN PATENT APPLICATION

(11) **EP 3 666 969 A1**
(43) Date of publication of application: **17.06.2020**
(21) Application number: 18858553.3
(22) Date of filing: 28.06.2018
(51) Int. Cl.: D06N 3/14, B32B 5/24, B32B 27/12, B32B 27/40, C08G 18/40, C08G 18/61, C08J 9/10

(54) **SYNTHETIC LEATHER**

(30) Priority: 19.09.2017 JP 2017178856
(71) Applicant: DIC Corporation, Tokyo 174-8520 (JP)
(72) Inventor: MAEDA, Ryo, Takaishi-shi Osaka 592-0001 (JP); KANAGAWA, Yoshinori, Takaishi-shi Osaka 592-0001 (JP)
(74) Representative: Beckmann, Claus
(86) International application number: PCT/JP2018/024564
(87) International publication number: WO 2019/058693

(57) **Abstract**

The present invention provides a synthetic leather at least including a base fabric (i), an intermediate layer (ii), and a skin layer (iii), in which the intermediate layer (ii) is formed of a moisture-curable hot-melt urethane resin composition containing a hot-melt urethane prepolymer (A1) having an isocyanate group and a foaming agent composition (A2), the skin layer (iii) is formed of an aqueous urethane resin composition (Z) containing a urethane resin (X) and an aqueous medium (Y), and the urethane resin (X) is a reaction product obtained by using a polyol (b1), a reactive silicone (b2) having a functional group which reacts with an isocyanate group, and a polyisocyanate (b3) as essential raw materials.

## Description

### Technical Field

The present invention relates to a synthetic leather.

### Background Art

A polyurethane resin is widely used in the production of a synthetic leather (including an artificial leather) due to mechanical strength and good texture of the resin. In the application, a solvent-based urethane resin containing N,N-dimethylformamide (DMF) has been the mainstream so far. However, due to DMF regulation in Europe, strengthening of VOC emission regulation in China and Taiwan, and DMF regulation by major apparel makers, de-DMF of a urethane resin for each layer constituting a synthetic leather has been required.

To be compatible with such an environment, the utilization of an aqueous urethane resin composition in which a urethane resin is dispersed in water or a moisture-curable hot-melt urethane resin which is solvent-free has been widely studied (for example, see PTL 1). However, a synthetic leather, in which an environmentally compatible material is used for both an intermediate layer and a skin layer and all of abrasion resistance, hydrolysis resistance, and texture are provided, has not yet been found.

### Citation List

### Patent Literature

PTL 1: JP-A-2007-119749

### Summary of Invention

### Technical Problem

An object to be achieved by the present invention is to provide a synthetic leather having excellent abrasion resistance, hydrolysis resistance, and texture.

### Solution to Problem

The present invention provides a synthetic leather at least including a base fabric (i), an intermediate layer (ii), and a skin layer (iii), in which the intermediate layer (ii) is formed of a moisture-curable hot-melt urethane resin composition containing a hot-melt urethane prepolymer (A1) having an isocyanate group and a foaming agent composition (A2), the skin layer (iii) is formed of an aqueous urethane resin composition (Z) containing a urethane resin (X) and an aqueous medium (Y), and the urethane resin (X) is a reaction product obtained by using a polyol (b1), a reactive silicone (b2) having a functional group which reacts with an isocyanate group, and a polyisocyanate (b3) as essential raw materials. Advantageous Effects of Invention

The synthetic leather of the present invention has excellent environmental compatibility because the intermediate layer is formed of a moisture-curable hot-melt urethane resin composition which is solvent-free and the skin layer is formed of an aqueous urethane resin composition, and has excellent abrasion resistance, hydrolysis resistance, and texture.

Therefore, the synthetic leather of the present invention can be used for applications requiring high durability, such as an automobile interior material, furniture, and sports shoes, for which the replacement of a solvent-based urethane resin with an aqueous or solvent-free urethane resin has been considered difficult.

### Description of Embodiments

The synthetic leather of the present invention is a synthetic leather at least including a base fabric (i), an intermediate layer (ii), and a skin layer (iii), in which the intermediate layer (ii) is formed of a moisture-curable hot-melt urethane resin composition containing a hot-melt urethane prepolymer (A1) having an isocyanate group and a foaming agent composition (A2), the skin layer (iii) is formed of an aqueous urethane resin composition (Z) containing a urethane resin (X) and an aqueous medium (Y), and the urethane resin (X) is a reaction product obtained by using a polyol (b1), a reactive silicone (b2) having a functional group which reacts with an isocyanate group, and a polyisocyanate (b3) as essential raw materials.

As the base fabric (i), for example, a non-woven fabric, a woven fabric, a knit, or the like made of polyester fiber, polyethylene fiber, nylon fiber, acrylic fiber, polyurethane fiber, acetate fiber, rayon fiber, polylactic acid fiber, cotton, hemp, silk, wool, glass fiber, carbon fiber, and blended fiber thereof can be used. Moreover, as the base fabric (i), a known impregnated base fabric obtained by impregnating these fabrics with a polyurethane resin can also be used.

The intermediate layer (ii) is formed of the moisture-curable hot-melt urethane resin composition containing the hot-melt urethane prepolymer (A1) having an isocyanate group and the foaming agent composition (A2). Since a foaming structure can be simply formed in the intermediate layer (ii) due to the foaming agent composition (A2), excellent texture can be obtained.

In the foaming agent composition (A2), for example, a thermally decomposable foaming agent such as N,N'-dinitrosopentamethylenetetramine, urea, azodicarbonamide, 4,4'-oxybis(benzenesulfonylhydrazide), and sodium hydrogen carbonate; and boric acid can be used. Among them, from the viewpoint that a favorable foamed state can be formed and excellent texture is obtained, N,N'-dinitrosopentamethylenetetramine and urea are preferably contained.

From the viewpoint that a favorable foamed state can be formed and an adverse effect on mechanical properties of the intermediate layer (ii) is low, the amount of the N,N'-dinitrosopentamethylenetetramine used is preferably 3% to 50% by mass and more preferably 5% to 40% by mass in the foaming agent composition (A2).

The urea functions as a foaming auxiliary of the N,N'-dinitrosopentamethylenetetramine, and thus is preferably used in a combination with the N,N'-dinitrosopentamethylenetetramine, and from the viewpoint that a favorable foamed state can be formed even in a thin film, the amount of the urea used is preferably 3% to 50% by mass and more preferably 8% to 40% by mass in the foaming agent composition (A2).

From the viewpoint that a favorable foamed state can be formed even in a thin film, a mass ratio [(N,N'-dinitrosopentamethylenetetramine)/(urea)] of the N,N'-dinitrosopentamethylenetetramine to the urea is preferably 10/90 to 90/10 and more preferably 30/70 to 70/30.

Furthermore, the foaming agent composition (A2) preferably further contains polyol (p-a) in order to uniformly mix the foaming agent with the hot-melt urethane prepolymer (A1).

As the polyol (p-a), for example, polyester polyol, polyether polyol, polycarbonate polyol, polyacryl polyol, polyolefin polyol, castor oil polyol, or polyhydric alcohol; a copolymer thereof; or the like can be used. The polyol can be appropriately determined according to the application in which a foamed cured product is used, and may be used alone or in a combination of two or more kinds thereof.

From the viewpoint of easily mixing with the hot-melt urethane prepolymer (A1), the number-average molecular weight of the polyol (p-a) is preferably 500 to 10,000 and more preferably 700 to 5,000. Moreover, the number-average molecular weight of the polyol (p-a) indicates a value measured by a gel permeation chromatography (GPC) method.

From the viewpoint of easily mixing with the hot-melt urethane prepolymer (A1) and mechanical properties of the foamed cured product, the amount of the polyol (p-a) used is preferably 30% to 90% by mass and more preferably 40% to 80% by mass in the foaming agent composition (A2).

Furthermore, from the viewpoint that a far superior foaming structure can be obtained, the foaming agent composition (A2) may further contain boric acid.

When the boric acid is used, the amount of the boric acid used is preferably 5 to 150 parts by mass and more preferably 10 to 120 parts by mass with respect to 100 parts by mass of the urea.

From the viewpoint that a synthetic leather having favorable texture is obtained without degrading mechanical properties of the intermediate layer (ii) and a favorable foamed state can be maintained even in a thin film, the amount of the foaming agent composition (A2) used is preferably 1 to 30 parts by mass and more preferably 5 to 25 parts by mass with respect to 100 parts by mass of the hot-melt urethane prepolymer (A1).

The hot-melt urethane prepolymer (A1) having an isocyanate group is a solid at room temperature, and is melted preferably at a temperature of 80°C to 120°C. The melt viscosity of the hot-melt urethane prepolymer (A1) measured at 100°C by a cone-plate viscometer is preferably 100 to 100,000 mPa·s and more preferably 500 to 70,000 mPa·s. Moreover, the melt viscosity of the hot-melt urethane prepolymer (A1) indicates a value measured by using the cone-plate viscometer after the hot-melt urethane prepolymer (A1) is melted at 100°C for 1 hour.

As the hot-melt urethane prepolymer (A1), a known hot-melt urethane prepolymer can be used, and for example, a reaction product of polyol (a1) and polyisocyanate (a2) can be used.

As the polyol (a1), the same polyol as the polyol (p-a) can be used, and the polyol can be appropriately determined according to an intended application and may be used alone or in a combination of two or more kinds thereof. Among them, when the synthetic leather of the present invention is used for applications requiring excellent bending resistance and hydrolysis resistance, polyoxytetramethylene glycol is used preferably in an amount of 50% by mass or more and more preferably in an amount of 60% to 90% by mass in the polyol (a1). Moreover, when the synthetic leather of the present invention is used for applications requiring excellent durability, polycarbonate polyol is used preferably in an amount of 50% by mass or more and more preferably in an amount of 60% to 90% by mass in the polyol (a1).

From the viewpoint of mechanical properties, the number-average molecular weight of the polyol (a1) is preferably 500 to 7,000 and more preferably 700 to 4,000. Moreover, the number-average molecular weight of the polyol (a1) indicates a value obtained by measuring in the same manner as the number-average molecular weight of the polyol (p-a).

As the polyisocyanate (a2), for example, aromatic polyisocyanate such as polymethylene polyphenyl polyisocyanate, diphenylmethane diisocyanate, polymeric diphenylmethane diisocyanate, carbodiimide-modified diphenylmethane diisocyanate, xylylene diisocyanate, phenylene diisocyanate, tolylene diisocyanate, and naphthalene diisocyanate; aliphatic or alicyclic polyisocyanate such as hexamethylene diisocyanate, lysine diisocyanate, cyclohexane diisocyanate, isophorone diisocyanate, dicyclohexylmethane diisocyanate, and tetramethyl xylylene diisocyanate; or the like can be used. The polyisocyanate may be used alone or in a combination of two or more kinds thereof. Among them, from the viewpoint that favorable reactivity and mechanical properties are obtained, aromatic polyisocyanate is preferably used and diphenylmethane diisocyanate and/or xylylene diisocyanate is more preferably used.

As a method for producing the hot-melt urethane prepolymer (A1), for example, the hot-melt urethane prepolymer (A1) can be produced by adding dropwise the polyol (a1) to a reactor vessel filled with the polyisocyanate (a2), then heating the mixture, and performing a reaction under the condition where the isocyanate group of the polyisocyanate (a2) becomes excessive with respect to the hydroxyl group of the polyol (a1).

An equivalent ratio ([NCO/OH]) of the isocyanate group of the polyisocyanate (a2) to the hydroxyl group of the polyol (a1) when the hot-melt urethane prepolymer (A1) is produced is preferably 1.1 to 5 and more preferably 1.5 to 3.5, from the viewpoint of the mechanical strength.

From the viewpoint of the mechanical strength, the content percentage of the isocyanate group in the hot-melt urethane prepolymer (A1) (hereinafter, abbreviated as "NCO%") is preferably 1.1% to 5% by mass and more preferably 1.5% to 4% by mass. Moreover, the content percentage of the isocyanate group in the hot-melt urethane prepolymer (A) indicates a value measured by a potentiometric titration method in accordance with JIS K 1603-1:2007.

The moisture-curable hot-melt urethane composition of the present invention contains the hot-melt urethane prepolymer (A) and the foaming agent composition (B) as essential components, but may contain other additives, if necessary.

As other additives, for example, a urethanization catalyst, a silane coupling agent, a thixotropic agent, an antioxidant, a plasticizer, a filling material, a dye, a pigment, a wax, or the like can be used. These additives may be used alone or in a combination of two or more kinds thereof.

In order to obtain excellent abrasion resistance, it is essential that the skin layer (iii) is formed of the aqueous urethane resin composition (Z) containing the urethane resin (X) and the aqueous medium (Y), and the urethane resin (X) is a reaction product obtained by using the polyol (b1), the reactive silicone (b2) having a functional group which reacts with an isocyanate group, and the polyisocyanate (b3) as essential raw materials. Moreover, in the present invention, since a chemical foaming agent is used as the intermediate layer (ii), there may be a problem that residues thereof bleed after long-term storage of the synthetic leather. However, by using the specific skin layer (iii), the problem of bleeding can be solved. The reason for this is considered to be that compatibility between the chemical foaming agent and a silicone part derived from the (b2) is low and thus the silicone part performs a barrier function.

The urethane resin (X) can be dispersed in the aqueous medium (Y) described later, and for example, a urethane resin having a hydrophilic group such as an anionic group, a cationic group, or a nonionic group; a urethane resin forcibly dispersed in the aqueous medium (Y) with an emulsifier; or the like can be used. These urethane resins (X) may be used alone or in a combination of two or more kinds thereof. Among them, from the viewpoint of production stability, a urethane resin having a hydrophilic group is preferably used, and from the viewpoint that far superior abrasion resistance and hydrolysis resistance are obtained, a urethane resin having an anionic group is more preferably used.

Examples of a method for obtaining the urethane resin having an anionic group include a method in which one or more kinds of compounds selected from the group consisting of a glycol compound having a carboxyl group and a compound having a sulfonyl group are used as a raw material.

As the glycol compound having a carboxyl group, for example, 2,2'-dimethylolpropionic acid, 2,2'-dimethylolbutanoic acid, 2,2'-dimethylolbutyric acid, 2,2 '-dimethylolpropionic acid, 2,2 '-valeric acid, or the like can be used. These compounds may be used alone or in a combination of two or more kinds thereof.

As the compound having a sulfonyl group, for example, 3,4-diaminobutanesulfonic acid, 3,6-diamino-2-toluenesulfonic acid, 2,6-diaminobenzenesulfonic acid, N-(2-aminoethyl)-2-aminoethylsulfonic acid, or the like can be used. These compounds may be used alone or in a combination of two or more kinds thereof.

The carboxyl group and the sulfonyl group may be partially or entirely neutralized with a basic compound in the aqueous urethane resin composition. As the basic compound, for example, organic amine such as ammonia, triethylamine, pyridine, and morpholine; alkanolamine such as monoethanolamine and dimethylethanolamine; a metal base compound containing sodium, potassium, lithium, calcium, or the like; or the like can be used.

When a urethane resin having an anionic group (hereinafter, abbreviated as an "anionic urethane resin") is used as the urethane resin (X), from the viewpoint that a hydrophilic group promotes hydrolysis and thus far superior hydrolysis resistance is obtained and the viewpoint that far superior peeling strength is obtained, the acid value of the anionic urethane resin is preferably 20 mgKOH/g or less, more preferably 3 to 17 mgKOH/g, still more preferably 5 to 14 mgKOH/g, and particularly preferably 5 to 13 mgKOH/g. A method for measuring the acid value of the anionic urethane resin will be described in Example described later. Moreover, examples of a method of adjusting the acid value of the anionic urethane resin include a method of adjusting the use amount of the glycol compound having a carboxyl group and the compound having a sulfonyl group, which provide an anionic group.

From the viewpoint that far superior hydrolysis resistance and peeling strength are obtained, the use amount of the glycol compound having a carboxyl group and the compound having a sulfonyl group is preferably 0.1% to 5% by mass, more preferably 0.3% to 4% by mass, and still more preferably 0.5% to 3.5% by mass in the total mass of the raw materials constituting the urethane resin (X).

Examples of a method for obtaining the urethane resin having a cationic group include a method in which one or more kinds of compounds having an amino group are used as a raw material.

As the compound having an amino group, for example, a compound having a primary or secondary amino group such as triethylenetetramine and diethylenetriamine; a compound having a tertiary amino group such as N-alkyldialkanolamine, for example, N-methyldiethanolamine and N-ethyldiethanolamine and N-alkyldiaminoalkylamine, for example, N-methyldiaminoethylamine and N-ethyldiaminoethylamine; or the like can be used. These compounds may be used alone or in a combination of two or more kinds thereof.

Examples of a method for obtaining the urethane resin having a nonionic group include a method in which one or more kinds of compounds having an oxyethylene structure are used as a raw material.

As the compound having an oxyethylene structure, for example, polyether polyol having an oxyethylene structure, such as polyoxyethylene glycol, polyoxyethylene polyoxypropylene glycol, and polyoxyethylene polyoxytetramethylene glycol can be used. These compounds may be used alone or in a combination of two or more kinds thereof.

As the emulsifier which can be used for obtaining the urethane resin forcibly dispersed in the aqueous medium (Y), for example, a nonionic emulsifier such as polyoxyethylene nonylphenyl ether, polyoxyethylene lauryl ether, polyoxyethylene styrylphenyl ether, polyoxyethylene sorbitol tetraoleate, and a polyoxyethylene-polyoxypropylene copolymer; an anionic emulsifier such as fatty acid salt, for example, sodium oleate, alkyl sulfate ester salt, alkyl benzene sulfonic acid salt, alkylsulfosuccinic acid salt, naphthalene sulfonic acid salt, polyoxyethylene alkyl sulfuric acid salt, alkanesulfonate sodium salt, and alkyl diphenyl ether sulfonic acid sodium salt; a cationic emulsifier such as alkyl amine salt, alkyltrimethyl ammonium salt, and alkyldimethylbenzyl ammonium salt; or the like can be used. These emulsifiers may be used alone or in a combination of two or more kinds thereof.

Specific examples of the urethane resin (X) include a reaction product of the polyol (b1), the raw material used for producing the urethane resin having a hydrophilic group, the reactive silicone (b2) having a functional group which reacts with an isocyanate group, and the polyisocyanate (b3).

As the polyol (b1), for example, polyether polyol, polyester polyol, polyacryl polyol, polycarbonate polyol, polybutadiene polyol, or the like can be used. The polyol may be used alone or in a combination of two or more kinds thereof. As the polyol (b1), from the viewpoint that far superior abrasion resistance, hydrolysis resistance, and peeling strength are obtained, polyether polyol and/or polycarbonate polyol is preferably used and polytetramethylene glycol and/or polycarbonate polyol is more preferably used. Moreover, as the polycarbonate polyol, for the same reason, polycarbonate polyol obtained by using 1,6-hexanediol and/or 1,4-butanediol as a raw material is preferably used and polycarbonate polyol obtained by using 1,6-hexanediol and 1,4-butanediol as raw materials is more preferably used. When a urethane resin having a nonionic group is used as the urethane resin (X), a compound other than the compound having the oxyethylene structure is used as the polyol (b1).

From the viewpoint of the mechanical strength of the obtained film, the number-average molecular weight of the polyol (b1) is preferably 500 to 8,000 and more preferably 800 to 5,000. Moreover, the number-average molecular weight of the polyol (b1) indicates a value measured in the same manner as the number-average molecular weight of the polyol (A2-3).

From the viewpoint of the mechanical strength of the film, the amount of the polyol (b1) used is preferably 40% to 90% by mass, more preferably 45% to 88% by mass, and still more preferably 50% to 85% by mass in the total mass of the raw materials constituting the urethane resin (X).

The polyol (b1) may be used in a combination with a chain extender (b1-1) having a number-average molecular weight of 50 to 450, if necessary. Moreover, the number-average molecular weight of the chain extender (b1-1) indicates a value obtained by measuring in the same manner as the number-average molecular weight of the polyol (A2-3).

As the chain extender (b1-1), for example, a chain extender having a hydroxyl group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, and trimethylolpropane; a chain extender having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, and hydrazine; or the like can be used. These chain extenders may be used alone or in a combination of two or more kinds thereof. Among them, from the viewpoint of durability such as hydrolysis resistance and heat resistance, a chain extender having an amino group is preferably used and one or more kinds of chain extenders selected from the group consisting of ethylenediamine, isophoronediamine, and piperazine are more preferably used.

When the chain extender (b1-1) is used, the amount of the chain extender used is preferably 0.1% to 10% by mass, more preferably 0.5% to 7% by mass, and still more preferably 0.8% to 5% by mass in the total mass of the raw materials constituting the urethane resin (X), from the viewpoint of durability such as hydrolysis resistance and heat resistance.

It is essential that the reactive silicone (b2) has a functional group which reacts with an isocyanate group, in order to obtain excellent abrasion resistance and hydrolysis resistance by being incorporated in the urethane resin (A).

From the viewpoint that high slipperiness can be imparted and far superior abrasion resistance, hydrolysis resistance, and peeling strength are obtained, the number-average molecular weight of the reactive silicone (b2) is preferably 1,000 to 100,000, more preferably 2,000 to 80,000, still more preferably 3,000 to 70,000, even more preferably 4,500 to 50,000, even still more preferably 4,700 to 30,000, and particularly preferably 5,000 to 20,000. Moreover, the number-average molecular weight of the reactive silicone (b2) indicates a value obtained by measuring in the same manner as that of the polyol (a1).

As the reactive silicone (b2), for example, one-end diol-type reactive silicone, one-end monool-type reactive silicone, one-end diamine-type reactive silicone, and one-end monoamine-type reactive silicone, which are represented by Formula (1); both-end diol-type reactive silicone, both-end diamine-type reactive silicone, both-end dimercapto-type reactive silicone, and both-end disilanol-type reactive silicone, which are represented by Formula (2); side-chain monoamine-type reactive silicone represented by Formula (3); or the like can be used. The reactive silicone may be used alone or in a combination of two or more kinds thereof.

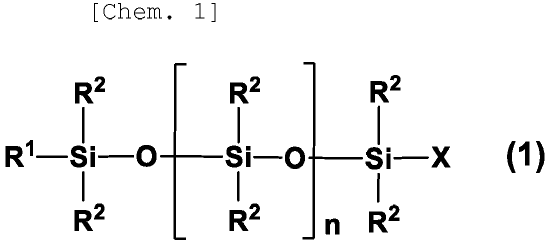

(In Formula (1), R¹ and R² each independently represent an alkyl group having 1 to 10 carbon atoms, X represents a structure represented by any one of Formulae (X-1) to (X-12), and n represents an integer of 50 to 670.)

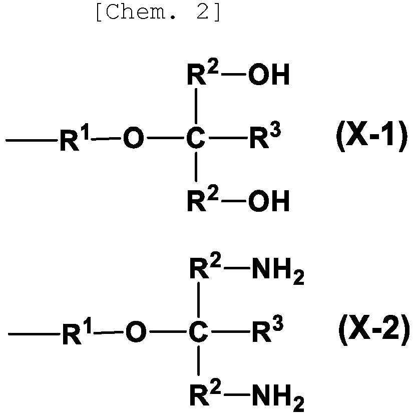

(In Formulae (X-1) and (X-2), R¹ and R² each independently represent an alkylene group having 1 to 10 carbon atoms, and R³ represents a hydrogen atom or an alkyl group having 1 to 8 carbon atoms.)

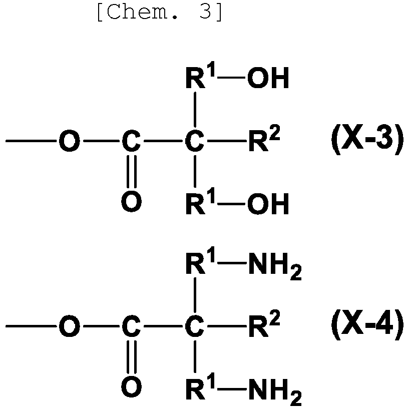

(In Formulae (X-3) and (X-4), R¹ represents an alkylene group having 1 to 10 carbon atoms, and R² represents a hydrogen atom or an alkyl group having 1 to 8 carbon atoms.)

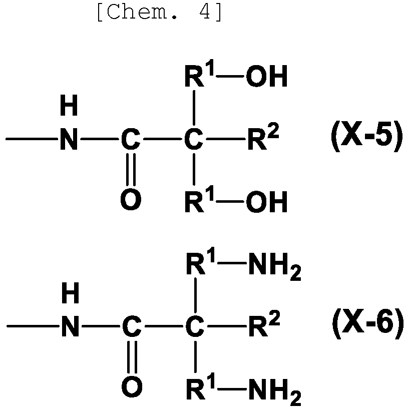

(In Formulae (X-5) and (X-6), R¹ represents an alkylene group having 1 to 10 carbon atoms, and R² represents a hydrogen atom or an alkyl group having 1 to 8 carbon atoms.)

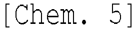

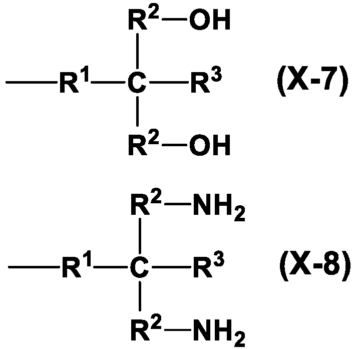

(In Formulae (X-7) and (X-8) , R¹ and R² each independently represent an alkylene group having 1 to 10 carbon atoms, and R³ represents a hydrogen atom or an alkyl group having 1 to 8 carbon atoms.)

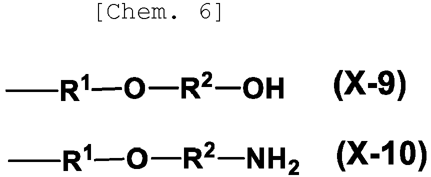

(In Formulae (X-9) and (X-10), R¹ and R² each independently represent an alkylene group having 1 to 10 carbon atoms.)

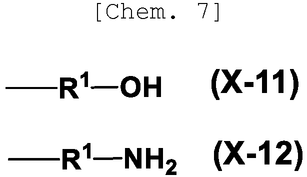

(In Formulae (X-11) and (X-12), R¹ represents an alkylene group having 1 to 10 carbon atoms.)

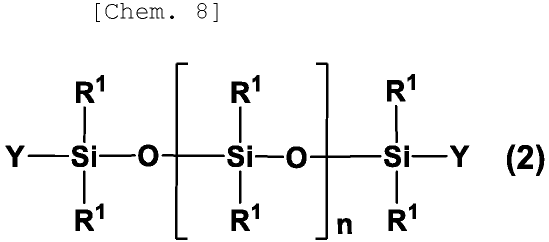

(In Formula (2), R¹ represents an alkyl group having 1 to 10 carbon atoms, Y represents a structure represented by any one of Formulae (Y-1) to (Y-5), and n represents an integer of 50 to 670.)

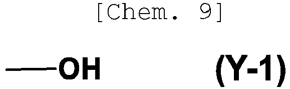

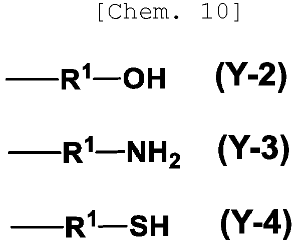

(In Formulae (Y-2) to (Y-4), R¹ represents an alkylene group having 1 to 10 carbon atoms.)

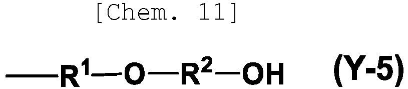

(In Formula (Y-5), R¹ and R² each independently represent an alkylene group having 1 to 10 carbon atoms.)

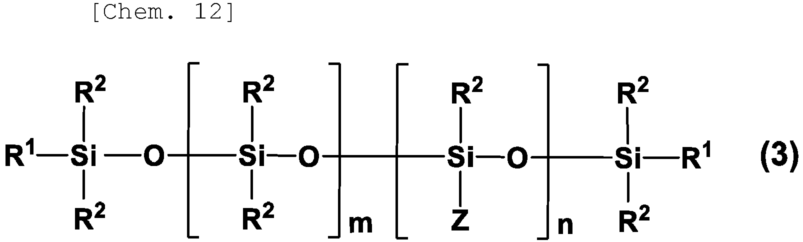

(In Formula (3), R¹ and R² each represent an alkyl group having 1 to 8 carbon atoms, Z represents a structure represented by Formula (Z-1) or (Z-2), m represents an integer of 50 to 670, and n represents an integer of 1 to 10.)

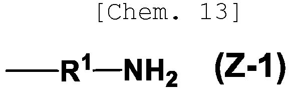

(In Formula (Z-1), R¹ represents an alkylene group having 1 to 10 carbon atoms.)

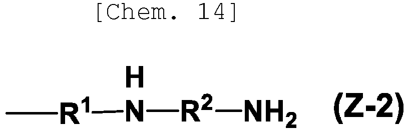

(In Formula (Z-2), R¹ and R² each independently represent an alkylene group having 1 to 10 carbon atoms.)

As the reactive silicone (b2), for example, "SILAPLANE FM-3321", "SILAPLANE FM-3325", "SILAPLANE FM-4421", "SILAPLANE FM-4425", "SILAPLANE FM-0421", "SILAPLANE FM-0425", "SILAPLANE FM-DA21", and "SILAPLANE FM-DA26", which are manufactured by JNC Corporation; "X-22-176GX-A" and "X-22-176F", which are manufactured by Shin-Etsu Chemical Co., Ltd.; and the like can be obtained as a commercial product.

As the reactive silicone (b2), from the viewpoint that higher slipperiness is imparted due to introduction of a silicone chain into a side chain of the urethane resin (X) and far superior abrasion resistance and hydrolysis resistance are obtained, reactive silicone represented by Formula (1) is preferably used, reactive silicone represented by Formula (1) where X is one or more kinds selected from the group consisting of Formulae (X-1), (X-7), and (X-9) is more preferably used, and reactive silicone represented by Formula (1) where X represents Formula (X-1) and/or (X-7) is still more preferably used. Moreover, it is preferable to use reactive silicone in which in Formula (1), R¹ and R² are each an alkyl group having 1 to 3 carbon atoms and n is an integer of 50 to 270, and in Formulae (X-1) and (X-7), R¹ and R² are each an alkylene group having 1 to 3 carbon atoms and R³ is an alkyl group having 1 to 3 carbon atoms.

From the viewpoint that far superior abrasion resistance and hydrolysis resistance are obtained, the amount of the reactive silicone (b2) used is preferably 1% to 25% by mass, more preferably 3% to 20% by mass, and still more preferably 3.8% to 19% by mass in the total mass of the raw materials constituting the urethane resin (A).

As the polyisocyanate (b3), for example, aromatic polyisocyanate such as phenylene diisocyanate, toluene diisocyanate, diphenylmethane diisocyanate, xylylene diisocyanate, naphthalene diisocyanate, polymethylene polyphenyl polyisocyanate, and carbodiimidated diphenylmethane polyisocyanate; aliphatic polyisocyanate and/or alicyclic polyisocyanate such as hexamethylene diisocyanate, lysine diisocyanate, cyclohexane diisocyanate, isophorone diisocyanate, dicyclohexylmethane diisocyanate, xylylene diisocyanate, tetramethyl xylylene diisocyanate, dimer acid diisocyanate, and norbornene diisocyanate; or the like can be used. The polyisocyanate may be used alone or in a combination of two or more kinds thereof. Among them, from the viewpoint of light discoloration resistance, aliphatic polyisocyanate and/or alicyclic polyisocyanate is preferably used and one or more kinds of polyisocyanate selected from the group consisting of hexamethylene diisocyanate, isophorone diisocyanate, and dicyclohexylmethane diisocyanate are more preferably used.

From the viewpoint of production stability and mechanical properties of the obtained film, the amount of the polyisocyanate (b3) used is preferably 5% to 40% by mass, more preferably 7% to 30% by mass, and still more preferably 10% to 25% by mass in the total mass of the raw materials constituting the urethane resin (X).

Examples of a method for producing the urethane resin (X) include a method in which the polyol (b1), the raw material used for producing the urethane resin having a hydrophilic group, the reactive silicone (b2), the polyisocyanate (b3), and if necessary, the chain extender (b1-1) are charged at once and reacted with one another. The reaction may be carried out, for example, at 50°C to 100°C for 3 to 10 hours.

A molar ratio [isocyanate group/total of functional groups that react with isocyanate groups] of the isocyanate group of the polyisocyanate (b3) to the total of the hydroxyl group of the polyol (b1), the hydroxyl group and the amino group of the chain extender (b1-1), the functional group which reacts with the isocyanate group of the raw material used for producing the urethane resin having a hydrophilic group, and the functional group which reacts with the isocyanate group of the reactive silicone (b2) in production of the urethane resin (X) is preferably 0.8 to 1.2 and more preferably 0.9 to 1.1.

When the urethane resin (X) is produced, the isocyanate groups remaining in the urethane resin (X) are preferably deactivated. When the isocyanate groups are deactivated, alcohol having one hydroxyl group, such as methanol, is preferably used. The amount of the alcohol used is preferably 0.001 to 10 parts by mass with respect to 100 parts by mass of the urethane resin (X).

Furthermore, when the urethane resin (X) is produced, an organic solvent may be used. As the organic solvent, for example, a ketone compound such as acetone and methyl ethyl ketone; an ether compound such as tetrahydrofuran and dioxane; an acetate ester compound such as ethyl acetate and butyl acetate; a nitrile compound such as acetonitrile; an amide compound such as a dimethylformamide and N-methylpyrrolidone; or the like can be used. These organic solvents may be used alone or in a combination of two or more kinds thereof. Moreover, the organic solvent is preferably removed by a distillation method or the like when the aqueous urethane resin composition is obtained.

As the aqueous medium (Y), for example, water, an organic solvent miscible with water, a mixture thereof, or the like can be used. As the organic solvent miscible with water, for example, an alcohol solvent such as methanol, ethanol, and n- and isopropanol; a ketone solvent such as acetone and methyl ethyl ketone; a polyalkylene glycol solvent such as ethylene glycol, diethylene glycol, and propylene glycol; an alkyl ether solvent such as a polyalkylene glycol; a lactam solvent such as N-methyl-2-pyrrolidone; or the like can be used. These aqueous media may be used alone or in a combination of two or more kinds thereof. Among them, from the viewpoint of safety and reduction in an environmental load, only water or a mixture of water and an organic solvent miscible with water is preferably used and only water is more preferably used.

From the viewpoint of workability, a mass ratio [(X) / (Y)] of the urethane resin (X) to the aqueous medium (Y) is preferably 10/80 to 70/30 and more preferably 20/80 to 60/40.

The aqueous urethane resin composition (Z) of the present invention contains the urethane resin (X) and the aqueous medium (Y), but may contain other additives, if necessary.

As the other additives, for example, an emulsifier, a neutralizer, a thickener, a urethanization catalyst, a crosslinking agent, a foaming agent, a pigment, a dye, an oil repellent agent, a hollow foamed body, a flame retardant, an antifoaming agent, a leveling agent, an antiblocking agent, or the like can be used. These additives may be used alone or in a combination of two or more kinds thereof.

Next, a method for producing the synthetic leather of the present invention will be described.

Examples of a method for producing the synthetic leather include a method in which the aqueous urethane resin composition (Z) is applied on a release-treated substrate and subjected to drying and processing to obtain the skin layer (iii), subsequently the hot-melt urethane prepolymer (A1) melted by heating is mixed with the foaming agent composition (A2), the mixture is applied on the skin layer (iii) and then is subjected to a heating treatment at a temperature equal to or higher than a heat melting temperature of the hot-melt urethane prepolymer (A1) to form the intermediate layer (ii), and then the base fabric (i) is bonded to the intermediate layer (ii).

Examples of a method of applying the aqueous urethane resin composition (Z) of the present invention include a method in which an applicator, a roll coater, a spray coater, a T-die coater, a knife coater, a comma coater, or the like is used.

Examples of a method of drying the aqueous urethane resin composition (Z) include a method of performing drying at 40°C to 130°C for 1 to 10 minutes. The thickness of the obtained skin layer (iii) is appropriately determined according to the application in which the synthetic leather is used and is, for example, 0.5 to 100 µm, respectively.

Examples of a method of mixing the foaming agent composition (A2) with the hot-melt urethane prepolymer (A1) melted by heating include a method in which a mixing device such as a batch-type stirrer, a static mixer, a rotor stator, and a two-liquid mixing device is used.

Examples of a method of applying the moisture-curable hot-melt urethane composition on the skin layer (iii) formed on the release paper include a method in which an applicator, a roll coater, a spray coater, a T-die coater, a knife coater, a comma coater, or the like is used.

Furthermore, since an applied material of the moisture-curable hot-melt urethane composition is foamed and increases in thickness by post-heating described later, the thickness at the time of application is preferably determined in consideration of a foaming degree described later.

Subsequently, by performing the heating treatment at a temperature equal to or higher than the heat melting temperature of the hot-melt urethane prepolymer (A1), foaming and curing of the foaming agent composition (A2) (particularly, (A2-1)) is promoted to produce the intermediate layer (ii). The heating treatment at this time is performed, for example, at 100°C to 150°C, and is more preferably performed at 110°C to 140°C from the viewpoint that an adverse effect on a substrate or degradation in the physical properties of the synthetic leather due to a thermal history is easily suppressed. For example, the time for the heating treatment is preferably 1 to 10 minutes.

After the intermediate layer (ii) is formed, the synthetic leather is obtained by boning the base fabric (i) to the intermediate layer (ii). However, before and/or after bonding of the base fabric (i), in order to age the intermediate layer (ii), after-curing may be performed, for example, at a temperature of 20°C to 80°C for 1 to 7 days.

The thickness of the intermediate layer (ii) of the synthetic leather obtained by the method is, for example, 10 to 500 µm, and within the range, a favorable foamed state can be formed. The thickness can be appropriately determined according to the application in which the synthetic leather of the present invention is used. Moreover, in the present invention, a favorable foamed state can be maintained even in a thin film, and the thickness is, for example, less than 100 µm, preferably 20 to 90 µm, more preferably 30 to 80 µm, and particularly preferably 50 to 70 µm.

Bubbles remaining in the intermediate layer (ii) are mainly foamed by post-heating of the (A2-1), but the foaming degree of the intermediate layer (ii) is preferably 1.2 or more, more preferably 1.5 to 3, and still more preferably 1.7 to 2.8. Moreover, the foaming degree of the intermediate layer (ii) indicates a value calculated from a ratio (V₂/V₁) of a volume (V₂) after foaming of the moisture-curable hot-melt urethane composition to a volume (V₁) before the foaming.

After the synthetic leather is produced, if necessary, aging may be performed, for example, at 30°C to 100°C for 1 to 10 days.

As described above, the synthetic leather of the present invention has excellent environmental compatibility because the intermediate layer is formed of a moisture-curable hot-melt urethane resin composition which is solvent-free and the skin layer is formed of an aqueous urethane resin composition, and has excellent abrasion resistance, hydrolysis resistance, and texture.

### Examples

### [Synthesis Example 1]

### <Preparation of moisture-curable hot-melt urethane resin composition (RHM-1 for intermediate layer)>

A reactor vessel equipped with a thermometer, a stirrer, an inert gas introduction port, and a reflux cooler was charged with 70 parts by mass of polyoxytetramethylene glycol (number-average molecular weight; 2,000, hereinafter, abbreviated as "PTMG") and 30 parts by mass of polyester polyol (reaction product of 1,6-hexanediol and adipic acid, number-average molecular weight; 2,000, hereinafter, abbreviated as "PEs (1)"), and dehydration was performed under a reduced pressure condition until a moisture content became 0.05% by mass or less.

Subsequently, 25 parts by mass of 4,4'-diphenylmethane diisocyanate (MDI) was added thereto, the temperature was raised to 100°C, and a reaction was performed for about 3 hours until a content percentage of an isocyanate group became constant, thereby obtaining a hot-melt urethane prepolymer having an isocyanate group with NCO% of 3.3.

Separately, 5 parts by mass of polyoxypropylene triol ("MN-3050" manufactured by Mitsui Chemicals, Inc., number-average molecular weight; 3,000), 2.5 parts by mass of N,N'-dinitrosopentamethylenetetramine, and 2.5 parts by mass of urea were mixed one another to prepare a foaming agent composition. These obtained components were set as RHM-1 for an intermediate layer.

### [Synthesis Example 2]

### <Preparation of moisture-curable hot-melt urethane resin composition (RHM-2 for intermediate layer)>

A reactor vessel equipped with a thermometer, a stirrer, an inert gas introduction port, and a reflux cooler was charged with 70 parts by mass of polycarbonate polyol ("NIPPOLLAN 980R" manufactured by Nippon Polyurethane Industry Co., Ltd., number-average molecular weight; 2,600, hereinafter, abbreviated as "PC") and 30 parts by mass of PEs(1), and dehydration was performed under a reduced pressure condition until a moisture content became 0.05% by mass or less.

Subsequently, 25 parts by mass of 4,4'-diphenylmethane diisocyanate was added thereto, the temperature was raised to 100°C, and a reaction was performed for about 3 hours until a content percentage of an isocyanate group became constant, thereby obtaining a hot-melt urethane prepolymer having an isocyanate group with NCO% of 3.2.

Separately, 5 parts by mass of polyoxypropylene triol ("MN-3050" manufactured by Mitsui Chemicals, Inc., number-average molecular weight; 3,000), 2.5 parts by mass of N,N'-dinitrosopentamethylenetetramine, and 2.5 parts by mass of urea were mixed one another to prepare a foaming agent composition. These obtained components were set as RHM-2 for an intermediate layer.

### [Synthesis Example 3]

### <Preparation of moisture-curable hot-melt urethane resin composition (RHM-3 for intermediate layer)>

A hot-melt urethane prepolymer having an isocyanate group was obtained in the same manner as in Synthesis Example 1.

Separately, 5 parts by mass of polyoxypropylene triol ("MN-3050" manufactured by Mitsui Chemicals, Inc., number-average molecular weight; 3,000), 3.5 parts by mass of N,N'-dinitrosopentamethylenetetramine, and 1.5 parts by mass of urea were mixed one another to prepare a foaming agent composition. These obtained components were set as RHM-3 for an intermediate layer.

### [Synthesis Example 4]

### <Preparation of moisture-curable hot-melt urethane resin composition (RHM-4 for intermediate layer)>

A hot-melt urethane prepolymer having an isocyanate group was obtained in the same manner as in Synthesis Example 1.

Separately, 5 parts by mass of polyoxypropylene triol ("MN-3050" manufactured by Mitsui Chemicals, Inc., number-average molecular weight; 3,000), 2.5 parts by mass of N,N'-dinitrosopentamethylenetetramine, 2.5 parts by mass of urea, and 0.5 parts by mass of boric acid were mixed one another to prepare a foaming agent composition. These obtained components were set as RHM-4 for an intermediate layer.

### [Synthesis Example 5]

### <Preparation of aqueous urethane resin composition (PUD-1 for skin layer)>

Into a four-necked flask equipped with a stirrer, a reflux cooling tube, a thermometer, and a nitrogen blowing tube, under a nitrogen stream, 500 parts by mass of polycarbonate diol ("ETERNACOLL UH-200" manufactured by UBE INDUSTRIES, LTD., number-average molecular weight: 2,000, hereinafter, abbreviated as "PC-1"), 125 parts by mass of both-end diol-type reactive silicone ("SILAPLANE FM-4425" manufactured by JNC Corporation, number-average molecular weight: 10,000, hereinafter, abbreviated as "both-end diol-type Si-1"), 25 parts by mass of dimethylolpropionic acid (hereinafter, abbreviated as "DMPA"), and 360 parts by mass of methyl ethyl ketone were added, and after being uniformly mixed, 177 parts by mass of dicyclohexylmethane diisocyanate (hereinafter, abbreviated as "H₁₂MDI") was added and then 0.1 parts by mass of dibutyltin dilaurate was added. A reaction was performed at 70°C for about 4 hours to obtain a methyl ethyl ketone solution of a urethane prepolymer having an isocyanate group at a molecular terminal. Subsequently, 19 parts by mass of triethylamine was added to the obtained methyl ethyl ketone solution of the urethane prepolymer, and after a carboxyl group in the urethane prepolymer was neutralized, 1960 parts by mass of ion-exchanged water was added thereto and then 14 parts by mass of ethylenediamine (hereinafter, abbreviated as "EDA") was added thereto, followed by a reaction. After completion of the reaction, methyl ethyl ketone was distilled off under reduced pressure to obtain an aqueous urethane resin composition (PUD-1 for skin layer) (nonvolatile content; 30% by mass, acid value; 13 KOHmg/g).

### [Synthesis Example 6]

### <Preparation of aqueous urethane resin composition (PUD-2 for skin layer)>

Into a four-necked flask equipped with a stirrer, a reflux cooling tube, a thermometer, and a nitrogen reflux tube, under a nitrogen stream, 500 parts by mass of polycarbonate diol ("DURANOL T5652" manufactured by Asahi Kasei Chemicals Corporation, number-average molecular weight: 2,000, hereinafter, abbreviated as "PC-2"), 26 parts by mass of one-end diol-type reactive silicone ("X-22-176GX-A" manufactured by Shin-Etsu Chemical Co., Ltd., number-average molecular weight: 14,000, hereinafter, abbreviated as "one-end diol-type Si-1"), 8 parts by mass of DMPA, and 269 parts by mass of methyl ethyl ketone were added, and after being uniformly mixed, 86 parts by mass of isophorone diisocyanate (hereinafter, abbreviated as "IPDI") was added and then 0.1 parts by mass of dibutyltin dilaurate was added. A reaction was performed at 70°C for about 4 hours to obtain a methyl ethyl ketone solution of a urethane prepolymer having an isocyanate group at a molecular terminal. Subsequently, 6 parts by mass of triethylamine was added to the obtained methyl ethyl ketone solution of the urethane prepolymer, and after a carboxyl group in the urethane prepolymer was neutralized, 1463 parts by mass of ion-exchanged water was added thereto and then 7 parts by mass of piperazine (hereinafter, abbreviated as "PZ") was added thereto, followed by a reaction. After completion of the reaction, methyl ethyl ketone was distilled off under reduced pressure to obtain an aqueous urethane resin composition (PUD-2 for skin layer) (nonvolatile content; 30% by mass, acid value; 5 KOHmg/g).

### [Synthesis Example 7]

### <Preparation of aqueous urethane resin composition (PUD-3 for skin layer)>

Into a four-necked flask equipped with a stirrer, a reflux cooling tube, a thermometer, and a nitrogen reflux tube, under a nitrogen stream, 500 parts by mass of polycarbonate diol ("DURANOL T4692" manufactured by Asahi Kasei Chemicals Corporation, number-average molecular weight: 2,000, hereinafter, abbreviated as "PC-3"), 88 parts by mass of one-end diol-type reactive silicone ("SILAPLANE FM-DA21" manufactured by JNC Corporation, number-average molecular weight: 5,000, hereinafter, abbreviated as "one-end diol-type Si-2"), 26 parts by mass of DMPA, and 332 parts by mass of methyl ethyl ketone were added, and after being uniformly mixed, 145 parts by mass of H₁₂MDI was added and then 0.1 parts by mass of dibutyltin dilaurate was added. A reaction was performed at 70°C for about 4 hours to obtain a methyl ethyl ketone solution of a urethane prepolymer having an isocyanate group at a molecular terminal. Subsequently, 20 parts by mass of triethylamine was added to the obtained methyl ethyl ketone solution of the urethane prepolymer, and after a carboxyl group in the urethane prepolymer was neutralized, 1808 parts by mass of ion-exchanged water was added thereto and then 16 parts by mass of Isophoronediamine (hereinafter, abbreviated as "IPDA") was added thereto, followed by a reaction. After completion of the reaction, methyl ethyl ketone was distilled off under reduced pressure to obtain an aqueous urethane resin composition (PUD-3 for skin layer) (nonvolatile content; 30% by mass, acid value; 14 KOHmg/g).

### [Synthesis Example 8] Preparation of aqueous urethane resin composition (PUD-4 for skin layer)

Into a four-necked flask equipped with a stirrer, a reflux cooling tube, a thermometer, and a nitrogen reflux tube, under a nitrogen stream, 500 parts by mass of PC-2, 133 parts by mass of polytetramethylene glycol (number-average molecular weight: 1,000, hereinafter, abbreviated as "PTMF1000"), 33 parts by mass of one-end diol-type reactive silicone ("X-22-176F" manufactured by Shin-Etsu Chemical Co., Ltd., number-average molecular weight: 12,000, hereinafter, abbreviated as "one-end diol-type Si-3"), 17 parts by mass of DMPA, and 385 parts by mass of methyl ethyl ketone were added, and after being uniformly mixed, 86 parts by mass of IPDI was added and then 0.1 parts by mass of dibutyltin dilaurate was added. A reaction was performed at 70°C for about 4 hours to obtain a methyl ethyl ketone solution of a urethane prepolymer having an isocyanate group at a molecular terminal. Subsequently, 13 parts by mass of triethylamine was added to the obtained methyl ethyl ketone solution of the urethane prepolymer, and after a carboxyl group in the urethane prepolymer was neutralized, 2098 parts by mass of ion-exchanged water was added thereto and then 15 parts by mass of EDA was added thereto, followed by a reaction. After completion of the reaction, methyl ethyl ketone was distilled off under reduced pressure to obtain an aqueous urethane resin composition (PUD-4 for skin layer) (nonvolatile content; 30% by mass, acid value; 8 KOHmg/g).

### [Comparative Synthesis Example 1]

### <Preparation of aqueous urethane resin composition (RHM'-1 for intermediate layer)>

RHM'-1 for an intermediate layer was obtained in the same manner as in Synthesis Example 1, except that a foaming agent composition was not prepared.

### [Comparative Synthesis Example 2]

### <Preparation of aqueous urethane resin composition (PUD'-1 for skin layer)>

An aqueous urethane resin composition (contains a urethane resin obtained by reacting PC-1, DMPA, IPDA, and IPDI with one another, and water, nonvolatile content; 30% by mass, acid value; 8 KOHmg/g) was set as PUD'-1 for a skin layer.

### [Example 1]

Blended liquid including 100 parts by mass of PUD-1 for a skin layer, 10 parts by mass of a water-dispersible black pigment ("DILAC HS-9530" manufactured by DIC Corporation), and 1 part by mass of an associative thickener ("HYDRAN ASSISTER T10" manufactured by DIC Corporation) was applied on flat release paper ("DN-TP-155T" manufactured by AJINOMOTO CO., INC.) so that a film thickness after drying was 30 µm, and dried at 70°C for 2 minutes and further at 120°C for 2 minutes, thereby obtaining a skin layer.

Subsequently, 100 parts by mass of the hot-melt urethane prepolymer obtained in Synthesis Example 1 was melted by heating at 100°C. 10 parts by mass of the foaming agent composition obtained in Synthesis Example 1 was added thereto, followed by mixing. The obtained moisture-curable hot-melt urethane composition was applied on the skin layer using a comma coater so that the thickness was 30 µm, and subjected to a heating treatment at 120°C for 5 minutes, followed by bonding of a non-woven fabric. Thereafter, the resultant was allowed to stand for 3 days under the conditions where a temperature is 23°C and relative humidity is 65% to obtain a synthetic leather with the intermediate layer (ii) having a thickness of 45 µm.

### [Examples 2 to 8 and Comparative Examples 1 to 3]

Synthetic leathers were obtained in the same manner as in Example 1, except that RHM for an intermediate layer used, PUD for a skin layer used, processing conditions used were changed as shown in Tables 1 and 2.

### [Method for measuring number-average molecular weight]

The number-average molecular weight of the polyol or the like used in Synthesis Examples was measured by a gel permeation column chromatography (GPC) method under the following conditions.

Measuring device: High performance GPC device ("HLC-8220GPC" manufactured by TOSOH CORPORATION)
Column: The following columns manufactured by TOSOH CORPORATION were used in a state of being connected in series.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (refractive index detector)
Column temperature: 40°C
Eluent: Tetrahydrofuran (THF)
Flow rate: 1.0 mL/min
Injection volume: 100 µL (tetrahydrofuran solution with a sample concentration of 0.4% by mass)
Standard sample: A calibration curve was prepared using the following standard polystyrene.

### (Standard polystyrene)

"TSKgel standard polystyrene A-500" manufactured by TOSOH CORPORATION
"TSKgel standard polystyrene A-1000" manufactured by TOSOH CORPORATION
"TSKgel standard polystyrene A-2500" manufactured by TOSOH CORPORATION
"TSKgel standard polystyrene A-5000" manufactured by TOSOH CORPORATION
"TSKgel standard polystyrene F-1" manufactured by TOSOH CORPORATION
"TSKgel standard polystyrene F-2" manufactured by TOSOH CORPORATION
"TSKgel standard polystyrene F-4" manufactured by TOSOH CORPORATION
"TSKgel standard polystyrene F-10" manufactured by TOSOH CORPORATION
"TSKgel standard polystyrene F-20" manufactured by TOSOH CORPORATION
"TSKgel standard polystyrene F-40" manufactured by TOSOH CORPORATION
"TSKgel standard polystyrene F-80" manufactured by TOSOH CORPORATION
"TSKgel standard polystyrene F-128" manufactured by TOSOH CORPORATION
"TSKgel standard polystyrene F-288" manufactured by TOSOH CORPORATION
"TSKgel standard polystyrene F-550" manufactured by TOSOH CORPORATION

### [Method for measuring melt viscosity]

After each of the hot-melt urethane prepolymers obtained in Synthesis Examples was melted at 100°C for 1 hour, 1 ml thereof was sampled, and a melt viscosity at 100°C was measured using a cone-plate viscometer (digital cone viscometer "CV-1S RT type" manufactured by MST ENGINEERING Co., Ltd., 40P cone, rotor rotation speed; 50 rpm).

### [Method for measuring foaming degree of intermediate layer (ii)]

In Examples and Comparative Examples, a volume (V₁) immediately after the melted hot-melt urethane prepolymer (A1) and the foaming agent composition (A2) were added and a volume (V₂) of the intermediate layer after foaming were measured, and a foaming degree was calculated from the ratio (V₂/V₁).

### [Method for evaluating foamed state]

The intermediate layers of the synthetic leathers obtained in Examples and Comparative Examples were observed using a scanning electron microscope "SU3500" (magnification of 200 times) manufactured by Hitachi High-Tech Corporation, and evaluation was performed as follows.
"A": the favorable foamed state can be observed.
"B": the favorable foamed state cannot be observed.

### [Method for evaluating texture]

The texture of each of the foamed cured products and the cured products obtained in Examples and Comparative Examples was evaluated by tactile feeling.
"A": the cured product was extremely flexible, and no irregularities were observed.
"B": the cured product had favorable flexibility, and no irregularities were observed.
"C": the cured product was hard, and irregularities were observed.

### [Method for evaluating hydrolysis resistance]

Each synthetic leather obtained in Examples and Comparative Examples was allowed to stand for 5 weeks under the conditions where a temperature is 70°C and humidity is 95%. Thereafter, the peeling strength was measured in the same manner as in [Method for measuring peel strength], and a retention ratio of the peeling strength before and after being allowed to stand was calculated and evaluated as follows.
"A"; 70% or more
"B"; 50% or more and less than 70%
"C"; less than 50%

### [Method for evaluating abrasion resistance]

A plane abrasion test (JASO-M403-88B method, load; 1 kg, stroke; 140 mm) was performed on the obtained synthetic leather, the number of times until the surface of the synthetic leather was worn and the base fabric was observed was measured, and evaluation was performed as follows.
"A"; 30,000 times or more
"B"; 10,000 times or more and less than 30,000 times
"C"; less than 10,000 times

### [Method for evaluating bleeding resistance]

The obtained synthetic leathers were allowed to stand for 1,000 hours under the conditions where a temperature is 80°C and humidity is 90% and then were visually observed, and evaluation was performed as follows.
"T"; bleeding matter was not observed.
"F"; bleeding matter was observed.

**[Table 1]**

| Table 1 | | | Example 1 | Example 2 | Example 3 | Example 4 | Example 5 |
|---|---|---|---|---|---|---|---|
| Intermediate layer (ii) | Moisture-curable hot-melt urethane resin composition | | RHM-1 for intermediate | RHM-2 for intermediate layer | RHM-3 for intermediate laver | RHM-4 for intermediate layer | RHM-1 for intermediate layer |
| | Hot-melt urethane prepolymer (A1) | | | | | | |
| | Polyol (a1) | | PTMG | PC | PTMG | PTMG | PTMG |
| | | | PEs(1) | PEs(1) | PES(1) | PEs(1) | PEs(1) |
| | Polyisocyanate (a2) | | MDI | MDI | MDI | MDI | MDI |
| | NCO% of hot-melt urethane prepolymer (A1) | | 3.3 | 3.2 | 3.3 | 3.3 | 3.3 |
| | Temperature (°C) for melting (A1) | | 100 | 100 | 100 | 100 | 100 |
| | Melt viscosity (mPa·s) at 100°C | | 2000 | 2500 | 2000 | 2000 | 2000 |
| | Foaming agent composition (A2) (parts by mass shown below are based on 100 parts by mass of (A1)) | | | | | | |
| | N,N'-Dinitrosopentamethylenetetramine (parts by mass) | | 2.5 | 2.5 | 3.5 | 2.5 | 2.5 |
| | Urea (parts by mass) | | 2.5 | 2.5 | 1.5 | 2.5 | 2.5 |
| | Polyol (p-a) (parts by mass) | MN3050 (parts by mass) | 5 | 5 | 5 | 5 | 5 |
| | Boric acid (parts by mass) | | | | | 0.5 | |
| | Mass ratio of (N,N'-Dinitrosopentamethylenetetramine)/(Urea) | | 50/50 | 50/50 | 70/30 | 50/50 | 50/50 |
| | Post-heating temperature (°C) | | 120 | 120 | 120 | 120 | 120 |
| | Thickness (µm) when mixture is applied | | 30 | 30 | 30 | 30 | 30 |
| | Thickness (µm) of intermediate layer (ii) | | 45 | 45 | 45 | 50 | 45 |
| | Foaming degree of intermediate layer | | 1.8 | 1.8 | 2.2 | 2.1 | 1.8 |
| Skin layer (iii) | Aqueous urethane resin composition (Z) | | PUD-1 for skin layer | PUD-2 for skin layer | PUD-3 for skin laver | PUD-4 for skin layer | PUD-2 for skin layer |
| | Polyol (b1) | | PC-1 | PC-2 | PC-3 | PTMG1000 | PC-2 |
| | Chain extender (b1-1) | | EDA | PZ | IPDA | EDA | PZ |
| | Raw material used for producing urethane resin having hydrophilic group | | DMPA | DMPA | DMPA | DMPA | DMPA |
| | Reactive silicone (b2) | Type | Both-end diol-tvpe Si-1 | One-end diol-type Si-1 | One-end diol-type Si-2 | One-end diol-type Si-3 | One-end diol-type Si-1 |
| | | Number-average molecular weight | 10,000 | 14,000 | 5,000 | 12,000 | 14,000 |
| | Polyisocyanate (b3) | | H12MDI | IPDI | H12MDI | IPDI | IPDI |
| | Acid value (mgKOH/g) | | 13 | 5 | 14 | 8 | 5 |
| Evaluation of texture | | | A | A | A | A | A |
| Evaluation of hydrolysis resistance | | | A | A | A | A | A |
| Evaluation of abrasion resistance | | | A | A | A | A | A |
| Evaluation of bleeding resistance | | | T | T | T | T | T |

**[Table 2]**

| Table 2 | | | Example 6 | Example 7 | Example 8 | Comparative Example 1 | Comparative Example 2 | Comparative Example 3 |
|---|---|---|---|---|---|---|---|---|
| Intermediate layer (ii) | Moisture-curable hot-melt urethane resin composition | | RHM-3 for intermediate layer | RHM-1 for intermediate layer | RHM-2 for intermediate layer | RHM-1 for intermediate layer | RHM'-1 for intermediate layer | RHM'-1 for intermediate layer |
| | Hot-melt urethane prepolymer (A1) | | | | | | | |
| | Polyol (al) | | PTMG | PTMG | PC | PTMG | PTMG | PTMG |
| | | | PEs(1) | PEs(1) | PEs(1) | PEs(1) | PEs(1) | PEs(1) |
| | Polyisocyanate (a2) | | MDI | MDI | MDI | MDI | MDI | MDI |
| | NCO% of hot-melt urethane prepolymer (A1) | | 3.3 | 3.3 | 3.2 | 3.3 | 3.3 | 3.3 |
| | Temperature (°C) for melting (A1) | | 100 | 100 | 100 | 100 | 100 | 100 |
| | Melt viscosity (mPa·s) at 100°C | | 2000 | 2000 | 2500 | 2000 | 2000 | 2000 |
| | Foaming agent composition (A2) (parts by mass shown below are based on 100 parts by mass of (A1)) | | | | | | | |
| | N,N'-Dinitrosopentamethylenetetramine (parts by mass) | | 3.5 | 2.5 | 2.5 | 2.5 | | |
| | Urea (parts by mass) | | 1.5 | 2.5 | 2.5 | 2.5 | | |
| | Polyol (p-a) (parts by mass) | MN3050 (parts by mass) | 5 | 5 | 5 | 5 | | |
| | Boric acid (parts by mass) | | | | | | | |
| | Mass ratio of (N,N'-Dinitrosopentamethylenetetramine)/(Urea) | | 70/30 | 50/50 | 50/50 | 50/50 | | |
| | Post-heating temperature (°C) | | 120 | 120 | 120 | 120 | None | None |
| | Thickness (µm) when mixture is applied | | 30 | 30 | 30 | 30 | 30 | 30 |
| | Thickness (µm) of intermediate layer (ii) | | 45 | 45 | 45 | 45 | 30 | 30 |
| | Foaming degree of intermediate layer | | 2.2 | 1.8 | 1.8 | 1.8 | - | - |
| Skin layer (iii) | Aqueous urethane resin composition (Z) | | PUD-4 for skin layer | PUD-4 for skin layer | PUD-3 for skin layer | PUD'-1 for skin layer | PUD-1 for skin layer | PUD' -1 for skin layer |
| | Polyol (b1) | | PTMG1000 | PTMG1000 | ' PC-3 | PC-1 | ' PC-1 | PC-1 |
| | Chain extender (b1-1) | | EDA | EDA | IPDA | | EDA | |
| | Raw material used for producing urethane resin having hydrophilic group | | DMPA | DMPA | DMPA | DMPA | DMPA | DMPA |
| | Reactive silicone (b2) | Type | One-end diol-type Si-3 | One-end diol-type Si-3 | One-end diol-type Si-2 | | Both-end diol-type Si-1 | |
| | | Number-average nolecular weight | 12,000 | 12,000 | 5,000 | | 10,000 | |
| | Polyisocyanate (b3) | | IPDI | IPDI | H12MDI | IPDI | H12MDI | IPDI |
| | Acid value (mgKOH/g) | | 8 | 8 | 14 | 8 | 13 | 8 |
| Evaluation of texture | | | A | A | A | B | C | C |
| Evaluation of hydrolysis resistance | | | A | A | A | B | A | B |
| Evaluation of abrasion resistance | | | A | A | A | C | A | C |
| Evaluation of bleeding resistance | | | T | T | T | F | T | T |

It was found that Examples 1 to 8, which are the synthetic leathers of the present invention, are excellent in abrasion resistance, hydrolysis resistance, and texture.

On the other hand, Comparative Example 1 was an embodiment in which the skin layer was formed of an aqueous urethane resin composition containing a urethane resin into which silicone was not introduced, but abrasion resistance was extremely poor. Moreover, the bleeding matter was observed.

Comparative Example 2 was an embodiment in which the intermediate layer was formed of a moisture-curable hot-melt urethane resin composition using no foaming agent composition, but texture was extremely poor.

Comparative Example 3 was an embodiment in which the skin layer was formed of a moisture-curable hot-melt urethane resin composition using no foaming agent composition and the intermediate layer was formed of an aqueous urethane resin containing a urethane resin obtained by using alicyclic polyisocyanate as a raw material, but abrasion resistance and texture were extremely poor.

## Claims

1. A synthetic leather comprising:
a base fabric (i);
an intermediate layer (ii); and
a skin layer (iii),
wherein the intermediate layer (ii) is formed of a moisture-curable hot-melt urethane resin composition containing a hot-melt urethane prepolymer (A1) having an isocyanate group and a foaming agent composition (A2), the skin layer (iii) is formed of an aqueous urethane resin composition (Z) containing a urethane resin (X) and an aqueous medium (Y), and the urethane resin (X) is a reaction product obtained by using a polyol (b1), a reactive silicone (b2) having a functional group which reacts with an isocyanate group, and a polyisocyanate (b3) as essential raw materials.

2. The synthetic leather according to claim 1, wherein the foaming agent composition (A2) contains N,N'-dinitrosopentamethylenetetramine and urea.

3. The synthetic leather according to claim 1 or 2, wherein the urethane resin (X) is an anionic urethane resin having an acid value of 20 mgKOH/g or less.

4. The synthetic leather according to any one of claims 1 to 3, wherein the reactive silicone (b2) has a number-average molecular weight of 4,000 or more.
